# EUROPEAN PATENT SPECIFICATION

(11) **EP 4 464 402 B1**
(45) Date of publication and mention of the grant of the patent: **10.12.2025**
(21) Application number: 24173651.1
(22) Date of filing: 01.05.2024
(51) Int. Cl.: B01D 53/26, C10L 3/10

(54) **A METHOD OF DRYING A GAS**
VERFAHREN ZUM TROCKNEN EINES GASES
PROCÉDÉ DE SÉCHAGE D'UN GAZ

(30) Priority: 02.05.2023 DK PA202300388
(43) Date of publication of application: 20.11.2024
(73) Proprietor: Greenfarm ApS, 8471 Sabro (DK)
(72) Inventor: LARSEN, Morten Nybo, 8471 Sabro (DK); THOMSEN, Kent Skaanning, 7323 Give (DK); MIKKELSEN, Claus Lindholdt, 6760 Ribe (DK)
(74) Representative: Dragsted Partners A/S

(56) References cited:
- WO-A1-2006/114475
- CN-A- 111 536 514
- DE-U1- 20 201 409
- KR-B1- 101 958 345
- US-B2- 7 582 140

## Description

### Technical field

A method of drying a gas comprising water (H₂O) to reduce the water content of the gas.

### Description

A plurality of processes are utilised to produce or extract combustible gasses. Combustible gasses are well suited to be chemically altered to transform the energy of the combustible gas into thermal energy and/or kinetic energy. Combustible gasses may be obtained via drilling, where the gas may be stored in the ground, or where the combustible gas may be produced via biological processes in order to produce a biogas from raw material such as agricultural waste, manure, municipal waste, plant material, sewage, green waste, wastewater, and food waste.

Biogas may be produced by anaerobic digestion with anaerobic organisms or methanogens inside an anaerobic digester, a biodigester or a bioreactor. The gas composition is primarily methane (CH₄) and carbon dioxide (CO₂) and may have some amounts of hydrogen sulphide (H₂S), moisture and siloxanes.

When a biogas exits a biogas reactor, the gas may be saturated with water, and it may be important to dry the gas before it is used, as the water content of the gas may cause corrosion in the feeding lines for the gas, or the water may be formed into ice in the feeding lines, creating obstacles to the flow of gas. Furthermore, when the biogas is saturated, the efficiency of the gas combustion may be reduced.

There are a number of different types of gas-drying processes, where a biogas may be dried via adsorption, absorption or membrane separation. These types of systems may have a high energy consumption, a low capacity and a high system complexity, which increases the cost of drying the biogas.

US 7,582,140 discloses a biogas treatment system which removes moisture and other unwanted materials from biogas originating with landfill or anaerobic digester. Water and other unwanted materials are thus removed from landfill gas and waste water biogas, while the gas temperature is controlled to a usable level.

Therefore, there is a need to provide an improved method and system to reduce the cost of drying a biogas; the efficiency of the drying process needs to be increased in order to reduce the cost of drying, or attempts must be made to utilise existing energy sources to dry the gasses.

In accordance with the invention as defined in appended claim 1, there is provided a method of drying a gas comprising water (H₂O) to reduce the water content of the gas, the method comprising the steps of: providing a first stream of gas having a first water content; feeding the first stream of gas to a first cooling part; cooling the gas from a first temperature to a second temperature, where the first cooling part comprises a first heat exchanger having a first cooling medium; feeding the first stream of gas at the second temperature to a first condensation part, where a first water content of the first stream of gas is reduced to a second water content; feeding the first stream of gas to a first heating part; heating the gas from the second temperature to a third temperature, where the first heating part comprises a second heat exchanger having a second cooling medium; feeding the first stream of gas to a combustion device, where a chemical reaction of the first gas is transformed into a first thermal energy, wherein the first thermal energy is transferred to the second cooling medium via a third heat exchanger, and wherein the second cooling medium is circulated in a first heat exchange circuit between the second heat exchanger and the third heat exchanger.

When a gas is to be utilised for energy production, such as thermal energy production or kinetic energy production, it is important to dry the gas prior to combustion in order to reduce the corrosive effects of a wet gas and to improve the efficiency of the combustion process.

In the present disclosure, the temperature of the gas is reduced in the first cooling part, where the reduction of the temperature reduces the ability of the gas to hold moisture in accordance with the effects shown in a Mollier Diagram, where a cold gas causes a condensation of the water present in the first gas stream, and causes the water in the gas to precipitate in liquid form. The precipitation of the water causes the water content of the gas to reduce, and thereby the gas is dried.

The flow of the first gas stream having a first water content through the first cooling part towards the first condensation part allows the gas and the liquid water to be separated, where the first condensation part collects the liquid water, and the first gas stream that passes the first condensation part has an amount of water that is reduced to a second water content which is less than the first water content.

By utilising the first thermal energy from the combustion of the first gas stream, it is possible to utilise waste or excessive energy which would otherwise be lost into the atmosphere, to increase the temperature of the combustible gas after the gas has been dried in order to improve the combustion efficiency of the gas, and to increase the efficiency of the combustion device and improve the consistency of the combustion in the combustion device.

The second cooling medium may be circulated between the second heat exchanger and the third heat exchanger, where the second cooling medium absorbs thermal energy from the combustion device in the third heat exchanger, where the second cooling medium having the increased thermal energy may be circulated towards the second heat exchanger of the second heating part, where the gas passes through the second heating part, where the temperature of the first gas stream is increased from the second temperature to a third temperature, where the second temperature may be the temperature of the gas that exits the first cooling part and/or the condensation part, and where the third temperature may be a temperature allowing the combustion efficiency of the gas to be increased.

Thus, by passing the first stream of gas through the first cooling part, the first condensation part and the first heating part, the water content of the gas is reduced significantly, and the gas is dried, compared to the gas coming from e.g. a biogas reactor.

With the present method, the first gas stream coming into the first cooling part is in gaseous form, where the cooling of the gas causes the water in the gas to condensate and change from a gaseous form to a liquid form. The first cooling part may have an inlet and an outlet, where the first heat exchanger may extend along the length of the first cooling part between the inlet and the outlet, and where the cooling of the gas may be continuous from the inlet to the outlet. Thus, the temperature of the gas may fall along the length of the first cooling part, where the gas enters the first cooling part at a first temperature and exits the first cooling part at a second temperature. As the temperature may be reduced along the length of the cooling part, the water content of the gas may be reduced incrementally along the length of the first cooling part, where the precipitated liquid water may be led or pushed towards the condensation part in which the condensation part collects the water, preventing at least parts of the water from flowing from the condensation part to the first heating device.

Within the context of the present disclosure, the term "gas comprising water" may be understood as a gas saturated with water.

In one or more exemplary embodiments, the first cooling medium is circulated in a second heat exchange circuit which is connected to the first heat exchanger. The second heat exchange circuit may be configured to provide the first heat exchanger with a thermal energy, where the first heat exchanger is configured to extract thermal energy from the gas, where the gas may be cooled from a first temperature to a second temperature which is lower than the first temperature. The second heat exchange circuit may be any kind of heat exchange circuit having a first cooling medium, where the thermal energy extracted from the first stream in the first cooling medium of gas may be circulated away from the first heat exchanger to a downstream position where the thermal energy of the first cooling medium is reduced, i.e. cooled, allowing the first cooling medium to be circulated back to the first heat exchanger, so that the first heat exchanger and the first cooling medium may be utilised to continuously extract thermal energy from the first gas stream.

In one or more exemplary embodiments, the first cooling medium is circulated in a second heat exchange circuit comprising a heat pump having a warm side and a cold side, where the first heat exchanger is positioned on the cold side. The heat pump may be utilised to transfer heat from the cold side to the warm side and vice versa, where the heat pump may be utilised to transfer heat, i.e. thermal energy, from the first heat exchanger, which is on the cold side, and where the heat may be transferred to the surroundings, or alternatively to the second cooling medium in the first heat exchange circuit to transfer thermal energy from the first cooling medium to the second cooling medium. The thermal energy extracted from the first stream of gas in the first cooling part may be transferred out of the first cooling medium in the warm side of the heat pump.

In one or more exemplary embodiments, the gas is a biogas originating from a biogas reactor, where the biogas reactor utilises biomass to generate the biogas. The biogas reactor may be utilised to produce a biogas by a sequence of processes by which biodegradable material is broken down, e.g. using anaerobic digestion, where the processes result in a production of methane and carbon dioxide as well as further biproducts. The biogas reactor may comprise a biomass which is held in a biomass volume of the biogas reactor, where the biogas ascends from the biomass to a biogas storage in the biogas reactor or on top of the process reactor. The biogas may then be fed out of the biogas reactor to provide a first stream of gas that may have a water content, as well as further biproducts.

In one or more exemplary embodiments, the biogas reactor comprises a fourth heat exchanger, wherein the second cooling medium is fed to the fourth heat exchanger, where the fourth heat exchanger is downstream from the second heat exchanger, and optionally upstream from the third heat exchanger. The fourth heat exchanger may be utilised to transfer thermal energy from the second cooling medium to a biomass that is present in the biomass volume of the biogas reactor, where the thermal energy may be utilised to raise the temperature of the biomass to increase biogas production in the biogas reactor. The fourth heat exchanger may be positioned upstream from the third heat exchanger.

In one or more exemplary embodiments, the first cooling part and/or the first heating part is a tube in a tube heat exchanger, where the tube in the tube heat exchanger comprises the first heat exchanger and/or the second heat exchanger. The first cooling part or the first heating part may be provided in the form of a tube in tube heat exchangers, where the first stream of gas is configured to flow from a first gas inlet to a first gas outlet, where the first cooling medium or the second cooling medium is configured to flow from a first cooling medium inlet to a first cooling medium outlet, and where the flow of gas is separated from the flow of cooling medium. The cooling medium will transfer thermal energy from the gas to the cooling medium in the first cooling part and will transfer thermal energy from the cooling medium to the gas in the first heating part, causing the temperature of the gas to fall inside the first cooling part and causing the temperature of the gas to rise inside the first heating part.

In one or more exemplary embodiments, the first cooling medium is fed to a fifth heat exchanger which transfers thermal energy from the first cooling medium to the second cooling medium, where the fifth heat exchanger is downstream of the fourth heat exchanger and upstream of the second heat exchanger. The fifth heat exchanger may be utilised to transfer thermal energy from the first cooling medium to the second cooling medium, where the second cooling medium is utilised at a higher temperature than the first cooling medium.

In one or more exemplary embodiments, the first cooling medium and/or the second heat exchange circuit may have a refrigerant that may be compressed in order to increase and/or decrease the pressure of the refrigerant to reduce the temperature and/or increase the temperature of the refrigerant. The first cooling medium and/or the second heat exchange circuit may comprise an evaporator, where the refrigerant may enter the evaporator as a low-pressure liquid and a condenser, and the refrigerant may enter the condenser as a high-pressure gas. The first cooling part and/or the first heat exchanger may be in communication with the evaporator to extract heat from the first stream of gas, while the condenser may be utilised to extract thermal energy from the first cooling medium. The refrigerant may also be utilised together with an expansion valve that is downstream from the condenser and upstream from the evaporator to allow the high-temperature, high-pressure refrigerant to change to a low-temperature, low-pressure liquid that enters the evaporator. In one exemplary embodiment, the condenser, evaporator and compressor may be part of the heat pump. The refrigerant may be a brine-based refrigerant, or any type of suitable refrigerant for a compressor and evaporator-based second heat exchange circuit.

In one or more exemplary embodiments, the combustion device is a gas turbine that produces a first mechanical energy to drive an electric generator. The combustion in the gas turbine may rotate rotating blades, where the rotating blades may be utilised to drive a compressor to compress air for the combustion process and may spin a generator to produce electricity, where the spinning of the rotating blades is in the form of a first mechanical energy. The gas turbine may comprise a recuperator which may catch the waste energy (first thermal energy) from the gas turbine, where the first thermal energy may be transferred to the second cooling medium via the third heat exchanger, and where the thermal energy may be utilised to heat the first stream of gas after the water content of the first stream of gas has been reduced.

In one or more exemplary embodiments, the combustion device is a gas motor/engine that produces a first mechanical energy to drive an electric generator. The combustion in the gas motor may rotate a crank shaft, where the rotational force of the crank shaft may be utilised to spin a generator to produce electricity, where the spinning of the crank shaft is in the form of a first mechanical energy. The gas motor may have a cooling system, where the cooling system of the gas motor may include the second cooling medium, and where the cooling system of the gas motor may be understood as being the third heat exchanger, allowing the second cooling medium to absorb thermal energy from the combustion of the gas in the gas motor.

The electricity produced by a gas motor or a gas turbine may be utilised to power a cooling device that may reduce the temperature of the first cooling medium and/or the second cooling medium to ensure that the cooling medium utilised in the first cooling part is capable of extracting sufficient thermal energy from the first stream of gas for the water to precipitate or form into liquid water.

In one or more exemplary embodiments, the first stream of gas is filtered in a position that is downstream of the heating device and upstream of the combustion device.

In one or more exemplary embodiments, the first temperature may be between 40°C and 30°C, or more specifically between 39°C and 32°C, or more specifically between 38°C and 34°C, or more specifically between 36°C and 35°C.

In one or more exemplary embodiments, the second temperature may be between 20°C and 2°C, or more specifically between 18°C and 3°C, or more specifically between 17°C and 4°C, or more specifically between 15°C and 5°C.

In one or more exemplary embodiments, the third temperature may be between 30°C and 21°C, or more specifically between 29°C and 23°C, or more specifically between 28°C and 25°C.

In one or more exemplary embodiments, the difference between the first water content and the second water content may be between 20% and 90% RH (relative humidity), or more specifically between 30% and 85% RH, or more specifically between 50% and 80% RH.

The present invention according to appended claim 14 also relates to a system for drying a gas comprising water (H₂O) to reduce the water content of the gas, the system comprising: a first gas source configured to provide a first stream of gas having a first water content; a first cooling part, where the first stream of gas is configured to be fed to the first cooling part that is configured to cool the gas from a first temperature to a second temperature, and where the first cooling part comprises a first heat exchanger having a first cooling medium; a first condensation part, where the first stream of gas is configured to be fed at the second temperature to a first condensation part, and where a first water content of the first stream of gas is configured to be reduced to a second water content; a first heating part, where the first stream of gas is configured to be fed to the first heating

part, where the first heating part is configured to heat the first stream of gas from the second temperature to a third temperature, and where the first heating part comprises a second heat exchanger having a second cooling medium; a combustion device, where the first stream of gas is fed to the combustion device, and where the combustion device is configured to combust the first gas and produce a first thermal energy; a third heat exchanger configured to transfer the first thermal energy to the second cooling medium; and a first heat exchange circuit configured to circulate the second cooling medium between the second heat exchanger and the third heat exchanger.

The system for drying a gas may comprise any and all of the technical features disclosed above in relation to the method of drying a gas.

### Brief description of the drawings

The following is an explanation of exemplary embodiments with reference to the drawings in which:
Fig. 1 is a simplistic schematic view of a system for drying a gas,
Fig. 2 is a schematic view of a system for drying a gas,
Fig. 3 is a perspective view of a first cooling part, a condensation part and a first heating part, and
Fig. 4 is a side view of a first cooling part, a condensation part and a first heating part of Fig. 3.

### Detailed description

Various exemplary embodiments and details are described below, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment need not have all the aspects or advantages shown. An aspect or an advantage described in conjunction with a particular embodiment is not necessarily limited to that embodiment and can be practised in any other embodiments even if not so illustrated, or if not so explicitly described.

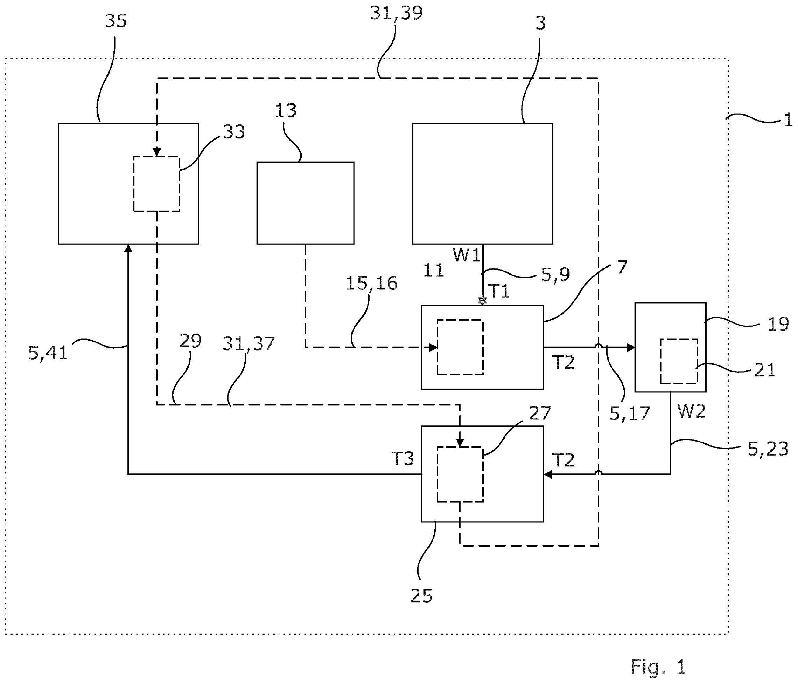

Fig. 1 discloses a system 1 for drying a gas, where the system 1 comprises a first gas source 3 which may be a biogas reactor. The first gas source 3 provides a first gas stream 5 which is fed to a first cooling part 7 via a first gas source stream 9. The first cooling part 7 comprises a first heat exchanger 11 configured to lower the temperature of the first gas stream 5 from a first temperature T1 to a second temperature T2. The first heat exchanger 11 may be connected with a second heat exchange circuit 13 which provides a first cooling medium 15 to the first heat exchanger 11 via a feed channel 16.

The first cooling part 7 causes the temperature of the first stream of gas 5 to fall, which causes the water content of the first stream of gas 5 to fall from a first water content W1 to a second water content W2, and where the water from the first stream of gas 5 is in liquid form and is fed along with the gas via a condensation connection 17 to a condensation part 19 which separates the liquid water from the stream of gas 5 and may collect the liquid water in a condensation tank 21.

When the first stream of gas 5 exits the condensation part 19 via a heating connection 23, the water content of the gas is W2, and the temperature of the gas is T2. The first stream of gas 5 enters a heating part 25 via the heating connection 23, where the heating part 25 is configured to raise the temperature of the first stream of gas 5 to a third temperature T3. The heating part 25 comprises a second heat exchanger 27 which is in fluid communication with a first heat exchange circuit 29 via a second cooling medium 31 which transfers thermal energy to the first stream of gas 5 and circulates the thermally depleted second cooling medium 31 to a third heat exchanger 33 via a feed line 37 which is used to transfer thermal energy from a combustion device 35 to the second cooling medium 31 and circulate the thermally loaded second cooling medium 31 via a return fluid line 39 back to the second heat exchanger 27.

When the temperature has been raised to T3, the first stream of gas 5 is fed to the combustion device 35 via a combustion feed line 41, where the combustion device 35 may be utilised to combust the gas, providing thermal energy to the third heat exchanger 33, which is used to warm up the gas in the heating part 25 via the first heat exchange circuit 29, thereby providing a circulating system, where the thermal energy from the combustion device 35 is used to heat the gas on a continuous basis, thereby utilising waste heat to prepare the first gas stream 5 for combustion.

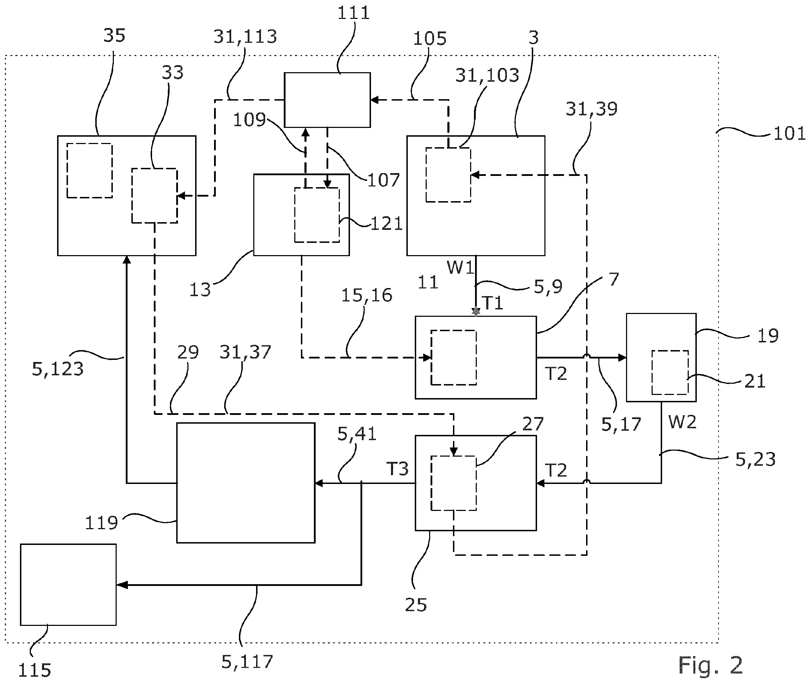

Fig. 2 discloses a system 101 for drying a gas having the same elements as Fig. 1 with the following additional details:
The second heat exchange circuit 13 comprises further elements than the system in Fig. 1, where the return fluid line 39 having the second cooling medium 31 is connected to a fourth heat exchanger 103 which is arranged in the biogas reactor, where the fourth heat exchanger 103 may be utilised to transfer thermal energy to the biomass arranged in the biogas reactor. The second cooling medium 31 may be led onwards via a second feed line 105 to a distribution part 111, where the second cooling medium 31 may be fed to a sixth heat exchanger 121, where thermal energy may be transferred from the second heat exchange circuit 13 via a first inlet 107 and a first outlet 109 to the first heat exchange circuit 29. The second cooling medium 31 may be fed onwards towards the third heat exchanger 33 via a distribution feed line 113.

The system 101 shown in Fig. 2 furthermore has a waste gas burner 115 (emergency gas flare) which is connected to the combustion feed line 41 via a waste gas line 117, where the first stream of gas 5 may be burned, should there be a blockage in the combustion feed line 41 due to e.g. a problem with the combustion device 35 which prevents the first stream of gas 5 from being combusted. As the system has a limited gas storage capacity, and gas production in the biogas reactor cannot be halted at short notice, the waste gas may be burned, so that the biogas is not released into the atmosphere.

The system 101 may further comprise a filter 119 which is connected to the combustion feed line 41, where the first stream of gas 5 may be fed to the filter device 119 in order to remove sulphides from the stream of gas prior to the gas being introduced into the combustion device 35. The filter device 119 may be an active carbon filter device. When the first stream of gas 5 has been filtered, the gas may be fed to the combustion device 35 via a filter line 123.

In one example of the present invention, the first temperature T1 of the gas may be 36°C, the second temperature T2 may be 5°C, and the third temperature T3 may be 28°C. In this example, the ambient temperature is around 10°C.

In one example of the present disclosure, the first water content W1 of the gas may be approximately 80% RH (relative humidity), and the second water content may be approximately 20% RH.

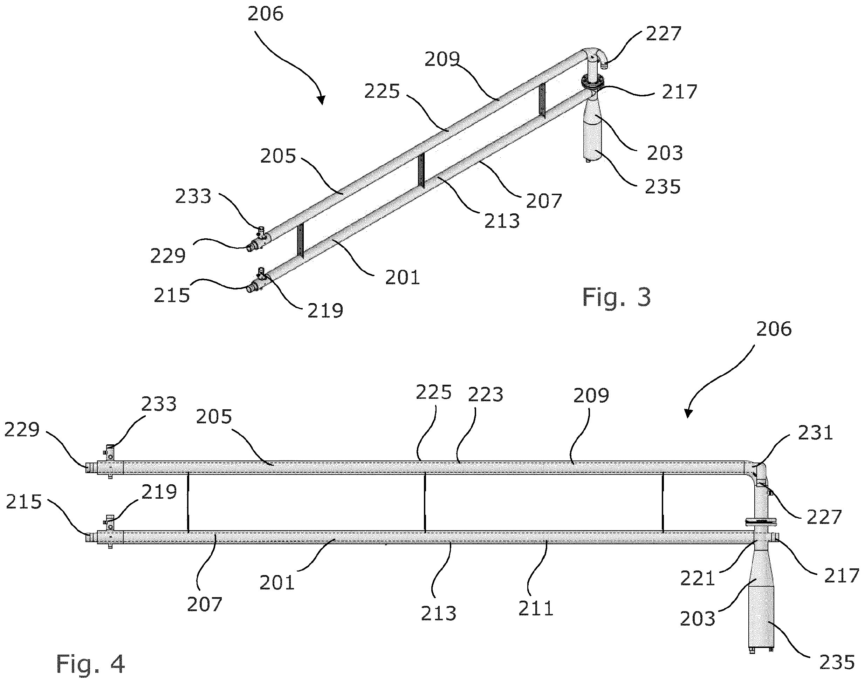

Fig 3. and Fig. 4 show a perspective view and a side view of a cooling part 201, a condensation part 203 and a heating part 205 in accordance with the present disclosure, which may be seen as a drying device 206, where the cooling part 201 may be in the form of a first tube in a tube heat exchanger 207, and the heating part 205 may be in the form of a second tube in a tube heat exchanger 209.

The first tube in the tube heat exchanger 207 may be the first heat exchanger 11 of Fig. 1 or 2. The first tube in the tube heat exchanger 207 comprises a first inner tube 211 and a first outer tube 213, where the first inner tube 211 has a first inner inlet 215 and a first inner outlet 217, and the first outer tube 213 has a first outer inlet 219 and a first outer outlet 221. The first cooling medium 15 enters the first inner inlet 215 and exits from the first inner outlet 217.

The second tube in the tube heat exchanger 209 may be the second heat exchanger 27 of Fig. 1 or 2. The second tube in the tube heat exchanger 209 comprises a second inner tube 223 and a second outer tube 225, where the second inner tube 223 has a second inner inlet 227 and a second inner outlet 229, and the second outer tube 225 has a second outer inlet 231 and a second outer outlet 233. The second cooling medium 31 enters the second inner inlet 227 and exits from the second inner outlet 229.

The first outer outlet 221 may be in upstream fluid communication with the condensation part 203, where the second outer inlet 231 is in downstream fluid communication with the condensation part 203, so that when a first stream of gas 5 is introduced into the drying device 206 via the first outer inlet 219, the gas flows through the first cooling part 201 to the first heating part 205 via the condensation part 203, where the first stream of gas 5 exits the drying device 206 via the second outer outlet 233.

The first gas stream 5 flows through the condensation part 203, where the precipitated water (liquid water) is collected in a condensation tank 235 which sequesters the water from the gas before the gas continues towards the heating part 205.

The first gas stream 5 is thereby dried in the drying device 206, so that when the gas enters the first outer inlet 219, the gas has a first water content, and when the gas exits the second outer outlet 233, the gas has a second water content which is lower than the first water content.

The use of the terms "first", "second", "third" and "fourth", "primary", "secondary", "tertiary", etc., does not imply any particular order, but are included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is also to be noted that the words "a" or "an" preceding an element do not exclude the presence of a plurality of such elements.

It should further be noted that any reference signs do not limit the scope of the claims. Although features have been shown and described, it will be understood that they are not intended to limit the claimed invention, and it will be made obvious to those skilled in the art that various changes and modifications may be made without departing from the scope of the claimed invention. The specification and drawings are, accordingly, to be regarded in an illustrative rather than restrictive sense.

### List of references

- 1: System for drying gas
- 3: First gas source
- 5: First gas stream
- 7: First cooling part
- 9: First gas source stream
- 11: First heat exchanger
- 13: Second heat exchange circuit
- 15: First cooling medium
- 17: Condensation connection
- 19: Condensation part
- 21: Condensation tank
- 23: Heating connection
- 25: Heating part
- 27: Second heat exchanger
- 29: First heat exchange circuit
- 31: Second cooling medium
- 33: Third heat exchanger
- 35: Combustion device
- 37: Feed line
- 39: Return fluid line
- 41: Combustion feed line
- 101: Second embodiment of system
- 103: Fourth heat exchanger
- 105: Second feed line
- 107: First inlet
- 109: First outlet
- 111: Distribution part
- 113: Distribution feed line
- 115: Waste gas burner
- 117: Waste gas line
- 119: Filter
- 121: Sixth heat exchanger
- 123: Filter feed line
- 201: Cooling part
- 203: Condensation part
- 205: Heating part
- 206: Drying device
- 207: First tube in tube heat exchanger
- 209: Second tube in tube heat exchanger
- 211: First inner tube
- 213: First outer tube
- 215: First inner inlet
- 217: First inner outlet
- 219: First outer inlet
- 221: First outer outlet
- 223: Second inner tube
- 225: Second outer tube
- 227: Second inner inlet
- 229: Second inner outlet
- 231: Second outer inlet
- 233: Second outer outlet
- 235: Condensation tank
- T1: First temperature
- T2: Second temperature
- T3: Third temperature
- W1: First water content
- W2: Second water content

## Claims

1. A method of drying a gas comprising water (H₂O) to reduce the water content of the gas, the method comprising the steps of:
- providing a first stream of gas (5) having a first water content,
- feeding the first stream of gas to a first cooling part (7), cooling the gas from a first temperature to a second temperature, where the first cooling part (7) comprises a first heat exchanger (11) having a first cooling medium (15),
- feeding the first stream of gas (5) at the second temperature to a first condensation part (19), where a first water content of the first stream of gas (5) is reduced to a second water content,
- feeding the first stream of gas (5) to a first heating part (25), heating the gas from the second temperature to a third temperature, where the first heating part (25) comprises a second heat exchanger (27) having a second cooling medium (31), and
- feeding the first stream of gas (5) to a combustion device (35) where a chemical reaction of the first gas is transformed into a first thermal energy,
wherein the first thermal energy is transferred to the second cooling medium (31) via a third heat exchanger (33), and
wherein the second cooling medium (31) is circulated in a first heat exchange circuit between the second heat exchanger (27) and the third heat exchanger (33).

2. A method of drying a gas in accordance with claim 1, wherein the first cooling medium (15) is circulated in a second heat exchange circuit (13) which is connected to the first heat exchanger (11).

3. A method of drying a gas in accordance with claim 2, wherein the second heat exchange circuit (13) comprises a heat pump having a warm side and a cold side, where the first heat exchanger (11) is positioned on the cold side.

4. A method of drying a gas in accordance with any of the preceding claims, wherein the gas is a biogas originating from a biogas reactor (3), where the biogas reactor (3) utilises biomass to generate the biogas.

5. A method of drying a gas in accordance with claim 3, wherein the biogas reactor comprises a fourth heat exchanger (103), wherein the second cooling medium (31) is fed to the fourth heat exchanger (103), where the fourth heat exchanger (103) is downstream from the second heat exchanger (27), and optionally upstream from the third heat exchanger (33).

6. A method of drying a gas in accordance with any of the preceding claims, wherein the first cooling part (7) and/or the first heating part (25) is a tube in a tube heat exchanger, and where the tube in the tube heat exchanger comprises the first heat exchanger (11) and/or the second heat exchanger (27).

7. A method of drying a gas in accordance with any of the preceding claims, wherein the first cooling medium (15) is fed to a fifth heat exchanger which transfers thermal energy from the first cooling medium (15) to the second cooling medium (31), where the fifth heat exchanger is downstream of the fourth heat exchanger and upstream of the second heat exchanger (27).

8. A method of drying a gas in accordance with any of the preceding claims, wherein the combustion device (35) is a gas turbine, and where the gas turbine produces a first mechanical energy to drive an electric generator.

9. A method of drying a gas in accordance with any of the preceding claims, wherein the first stream of gas (5) is filtered in a position that is downstream of the heating device (25) and upstream of the combustion device (35).

10. A method of drying a gas in accordance with any of the preceding claims, wherein the first temperature may be between 40°C and 30°C, or more specifically between 39°C and 32°C, or more specifically between 38°C and 34°C, or more specifically between 36°C and 35°C.

11. A method of drying a gas in accordance with any of the preceding claims, wherein the second temperature may be between 20°C and 2°C, or more specifically between 18°C and 3°C, or more specifically between 17°C and 4°C, or more specifically between 15°C and 5°C.

12. A method of drying a gas in accordance with any of the preceding claims, wherein the third temperature may be between 30°C and 21°C, or more specifically between 29°C and 23°C, or more specifically between 28°C and 25°C.

13. A method of drying a gas in accordance with any of the preceding claims, wherein the difference between the first water content and the second water content may be between 20% and 90% RH, or more specifically between 30% and 85% RH, or more specifically between 50% and 80% RH.

14. A system for drying a gas comprising water (H₂O) to reduce the water content of the gas, the system comprising:
- a first gas source configured to provide a first stream of gas (5) having a first water content,
- a first cooling part (7), where the first stream of gas (5) is configured to be fed to the first cooling part (7) that is configured to cool the gas from a first temperature to a second temperature, where the first cooling part (7) comprises a first heat exchanger (11) having a first cooling medium (15),
- a first condensation part (19), where the first stream of gas (5) is configured to be fed at the second temperature to a first condensation part (19), and where a first water content of the first stream of gas (5) is configured to be reduced to a second water content,
- a first heating part (25), where the first stream of gas (5) is configured to be fed to the first heating part (25) that is configured to heat the first stream of gas (5) from the second temperature to a third temperature, where the first heating part (25) comprises a second heat exchanger (27) having a second cooling medium (31),
- a combustion device (35), where the first stream of gas (5) is fed to the combustion device (35) that is configured to combust the first gas and produce a first thermal energy,
- a third heat exchanger (33) configured to transfer the first thermal energy to the second cooling medium (31), and
- a first heat exchange circuit configured to circulate the second cooling medium (31) between the second heat exchanger (27) and the third heat exchanger (33).

## Patentansprüche

1. Verfahren zum Trocknen eines Wasser (H₂O) aufweisenden Gases, um den Wassergehalt des Gases zu reduzieren, wobei das Verfahren die folgenden Schritte aufweist:
- Bereitstellen eines ersten Gasstroms (5) mit einem ersten Wassergehalt,
- Zuführen des ersten Gasstroms zu einem ersten Kühlteil (7), Kühlen des Gases von einer ersten Temperatur auf eine zweite Temperatur, wobei das erste Kühlteil (7) einen ersten Wärmetauscher (11) mit einem ersten Kühlmedium (15) aufweist,
- Zuführen des ersten Gasstroms (5) bei der zweiten Temperatur zu einem ersten Kondensationsteil (19), wobei ein erster Wassergehalt des ersten Gasstroms (5) auf einen zweiten Wassergehalt reduziert wird,
- Zuführen des ersten Gasstroms (5) zu einem ersten Erwärmungsteil (25), Erwärmen des Gases von der zweiten Temperatur auf eine dritte Temperatur, wobei das erste Erwärmungsteil (25) einen zweiten Wärmetauscher (27) mit einem zweiten Kühlmedium (31) aufweist, und
- Zuführen des ersten Gasstroms (5) zu einer Verbrennungsvorrichtung (35), wobei eine chemische Reaktion des ersten Gases in eine erste thermische Energie umgewandelt wird,
wobei die erste thermische Energie über einen dritten Wärmetauscher (33) auf das zweite Kühlmedium (31) übertragen wird, und
wobei das zweite Kühlmedium (31) in einem ersten Wärmeaustauschkreislauf zwischen dem zweiten Wärmetauscher (27) und dem dritten Wärmetauscher (33) zirkuliert wird.

2. Verfahren zum Trocknen eines Gases nach Anspruch 1, wobei das erste Kühlmedium (15) in einem mit dem ersten Wärmetauscher (11) verbundenen zweiten Wärmetauschkreislauf (13) zirkuliert wird.

3. Verfahren zum Trocknen eines Gases nach Anspruch 2, wobei der zweite Wärmetauschkreislauf (13) eine Wärmepumpe mit einer Warmseite und einer Kaltseite aufweist, wobei der erste Wärmetauscher (11) auf der Kaltseite positioniert ist.

4. Verfahren zum Trocknen eines Gases nach einem der vorhergehenden Ansprüche, wobei das Gas ein aus einem Biogasreaktor (3) stammendes Biogas ist, wobei der Biogasreaktor (3) Biomasse nutzt, um das Biogas zu erzeugen.

5. Verfahren zum Trocknen eines Gases nach Anspruch 3, wobei der Biogasreaktor einen vierten Wärmetauscher (103) aufweist, wobei das zweite Kühlmedium (31) dem vierten Wärmetauscher (103) zugeführt wird, wobei der vierte Wärmetauscher (103) stromabwärts des zweiten Wärmetauschers (27) und optional stromaufwärts des dritten Wärmetauschers (33) ist.

6. Verfahren zum Trocknen eines Gases nach einem der vorhergehenden Ansprüche, wobei das erste Kühlteil (7) und/oder das erste Erwärmungsteil (25) ein Rohr-in-Rohr-Wärmetauscher ist, und wobei der Rohr-in-Rohr-Wärmetauscher den ersten Wärmetauscher (11) und/oder den zweiten Wärmetauscher (27) aufweist.

7. Verfahren zum Trocknen eines Gases nach einem der vorhergehenden Ansprüche, wobei das erste Kühlmedium (15) einem fünften Wärmetauscher zugeführt wird, der thermische Energie von dem ersten Kühlmedium (15) auf das zweite Kühlmedium (31) überträgt, wobei der fünfte Wärmetauscher stromabwärts des vierten Wärmetauschers und stromaufwärts des zweiten Wärmetauschers (27) ist.

8. Verfahren zum Trocknen eines Gases nach einem der vorhergehenden Ansprüche, wobei die Verbrennungsvorrichtung (35) eine Gasturbine ist, und wobei die Gasturbine eine erste mechanische Energie produziert, um einen elektrischen Generator anzutreiben.

9. Verfahren zum Trocknen eines Gases nach einem der vorhergehenden Ansprüche, wobei der erste Gasstrom (5) an einer Position gefiltert wird, die stromabwärts der Erwärmungsvorrichtung (25) und stromaufwärts der Verbrennungsvorrichtung (35) ist.

10. Verfahren zum Trocknen eines Gases nach einem der vorhergehenden Ansprüche, wobei die erste Temperatur zwischen 40°C und 30°C, oder weiter bevorzugt zwischen 39°C und 32°C, oder weiter bevorzugt zwischen 38°C und 34°C, oder weiter bevorzugt zwischen 36°C und 35°C liegen kann.

11. Verfahren zum Trocknen eines Gases nach einem der vorhergehenden Ansprüche, wobei die zweite Temperatur zwischen 20°C und 2°C, oder weiter bevorzugt zwischen 18°C und 3°C, oder weiter bevorzugt zwischen 17°C und 4°C, oder weiter bevorzugt zwischen 15°C und 5°C liegen kann.

12. Verfahren zum Trocknen eines Gases nach einem der vorhergehenden Ansprüche, wobei die dritte Temperatur zwischen 30°C und 21°C, oder weiter bevorzugt zwischen 29°C und 23°C, oder weiter bevorzugt zwischen 28°C und 25°C liegen kann.

13. Verfahren zum Trocknen eines Gases nach einem der vorhergehenden Ansprüche, wobei die Differenz zwischen dem ersten Wassergehalt und dem zweiten Wassergehalt zwischen 20 % und 90 % RH, oder weiter bevorzugt zwischen 30 % und 85 % RH, oder weiter bevorzugt zwischen 50 % und 80 % RH liegen kann.

14. System zum Trocknen eines Wasser (H₂O) aufweisenden Gases, um den Wassergehalt des Gases zu reduzieren, wobei das System aufweist:
- eine erste Gasquelle, die dazu ausgebildet ist, einen ersten Gasstrom (5) mit einem ersten Wassergehalt bereitzustellen,
- ein erstes Kühlteil (7), wobei der erste Gasstrom (5) dazu ausgebildet ist, dem ersten Kühlteil (7) zugeführt zu werden, der dazu ausgebildet ist, das Gas von einer ersten Temperatur auf eine zweite Temperatur zu kühlen, wobei das erste Kühlteil (7) einen ersten Wärmetauscher (11) mit einem ersten Kühlmedium (15) aufweist,
- ein erstes Kondensationsteil (19), wobei der erste Gasstrom (5) dazu ausgebildet ist, bei der zweiten Temperatur einem ersten Kondensationsteil (19) zugeführt zu werden, und wobei ein erster Wassergehalt des ersten Gasstroms (5) dazu ausgebildet ist, auf einen zweiten Wassergehalt reduziert zu werden,
- ein erstes Erwärmungsteil (25), wobei der erste Gasstrom (5) dazu ausgebildet ist, dem ersten Erwärmungsteil (25) zugeführt zu werden, der dazu ausgebildet ist, den ersten Gasstrom (5) von der zweiten Temperatur auf eine dritte Temperatur zu erwärmen, wobei das erste Erwärmungsteil (25) einen zweiten Wärmetauscher (27) mit einem zweiten Kühlmedium (31) aufweist,
- eine Verbrennungsvorrichtung (35), wobei der erste Gasstrom (5) der Verbrennungsvorrichtung (35) zugeführt wird, die dazu ausgebildet ist, das erste Gas zu verbrennen und eine erste thermische Energie zu produzieren,
- einen dritten Wärmetauscher (33), der dazu ausgebildet ist, die erste thermische Energie auf das zweite Kühlmedium (31) zu übertragen, und
- einen ersten Wärmetauschkreislauf, der dazu ausgebildet ist, das zweite Kühlmedium (31) zwischen dem zweiten Wärmetauscher (27) und dem dritten Wärmetauscher (33) zu zirkulieren.

## Revendications

1. Procédé de séchage d'un gaz comprenant de l'eau (H₂O) pour réduire la teneur en eau du gaz, le procédé comprenant les étapes consistant à :
- fournir un premier flux de gaz (5) ayant une première teneur en eau,
- alimenter le premier flux de gaz vers une première partie de refroidissement (7), refroidir le gaz d'une première température à une deuxième température, où la première partie de refroidissement (7) comprend un premier échangeur de chaleur (11) ayant un premier milieu de refroidissement (15),
- alimenter le premier flux de gaz (5) à la deuxième température vers une première partie de condensation (19), où une première teneur en eau du premier flux de gaz (5) est réduite à une deuxième teneur en eau,
- alimenter le premier flux de gaz (5) vers une première partie de chauffage (25), en chauffant le gaz de la deuxième température à une troisième température, où la première partie de chauffage (25) comprend un deuxième échangeur de chaleur (27) ayant un deuxième milieu de refroidissement (31), et
- alimenter le premier flux de gaz (5) vers un dispositif de combustion (35) où une réaction chimique du premier gaz est transformée en une première énergie thermique,
dans lequel la première énergie thermique est transférée au deuxième milieu de refroidissement (31) par l'intermédiaire d'un troisième échangeur de chaleur (33), et
dans lequel le deuxième milieu de refroidissement (31) circule dans un premier circuit d'échange de chaleur entre le deuxième échangeur de chaleur (27) et le troisième échangeur de chaleur (33).

2. Procédé de séchage d'un gaz selon la revendication 1, dans lequel le premier milieu de refroidissement (15) circule dans un deuxième circuit d'échange de chaleur (13) qui est connecté au premier échangeur de chaleur (11).

3. Procédé de séchage d'un gaz selon la revendication 2, dans lequel le deuxième circuit d'échange de chaleur (13) comprend une pompe à chaleur ayant un côté chaud et un côté froid, où le premier échangeur de chaleur (11) est positionné sur le côté froid.

4. Procédé de séchage d'un gaz selon l'une quelconque des revendications précédentes, dans lequel le gaz est un biogaz provenant d'un réacteur à biogaz (3), où le réacteur à biogaz (3) utilise la biomasse pour générer le biogaz.

5. Procédé de séchage d'un gaz selon la revendication 3, dans lequel le réacteur à biogaz comprend un quatrième échangeur de chaleur (103), dans lequel le deuxième milieu de refroidissement (31) est alimenté au quatrième échangeur de chaleur (103), où le quatrième échangeur de chaleur (103) est en aval du deuxième échangeur de chaleur (27), et éventuellement en amont du troisième échangeur de chaleur (33).

6. Procédé de séchage d'un gaz selon l'une quelconque des revendications précédentes, dans lequel la première partie de refroidissement (7) et/ou la première partie de chauffage (25) est un tube dans un échangeur de chaleur tubulaire, et où le tube dans l'échangeur de chaleur tubulaire comprend le premier échangeur de chaleur (11) et/ou le deuxième échangeur de chaleur (27).

7. Procédé de séchage d'un gaz selon l'une quelconque des revendications précédentes, dans lequel le premier milieu de refroidissement (15) est alimenté vers un cinquième échangeur de chaleur qui transfère l'énergie thermique du premier milieu de refroidissement (15) au deuxième milieu de refroidissement (31), où le cinquième échangeur de chaleur est situé en aval du quatrième échangeur de chaleur et en amont du deuxième échangeur de chaleur (27).

8. Procédé de séchage d'un gaz selon l'une quelconque des revendications précédentes, dans lequel le dispositif de combustion (35) est une turbine à gaz, et où la turbine à gaz produit une première énergie mécanique pour entraîner un générateur électrique.

9. Procédé de séchage d'un gaz selon l'une quelconque des revendications précédentes, dans lequel le premier flux de gaz (5) est filtré dans une position qui est en aval du dispositif de chauffage (25) et en amont du dispositif de combustion (35).

10. Procédé de séchage d'un gaz selon l'une quelconque des revendications précédentes, dans lequel la première température peut être comprise entre 40°C et 30°C, ou plus précisément entre 39°C et 32°C, ou plus précisément entre 38°C et 34°C, ou plus précisément entre 36°C et 35°C.

11. Procédé de séchage d'un gaz selon l'une quelconque des revendications précédentes, dans lequel la deuxième température peut être comprise entre 20°C et 2°C, ou plus particulièrement entre 18°C et 3°C, ou plus particulièrement entre 17°C et 4°C, ou plus particulièrement entre 15°C et 5°C.

12. Procédé de séchage d'un gaz selon l'une quelconque des revendications précédentes, dans lequel la troisième température peut être comprise entre 30°C et 21°C, ou plus particulièrement entre 29°C et 23°C, ou plus particulièrement entre 28°C et 25°C.

13. Procédé de séchage d'un gaz selon l'une quelconque des revendications précédentes, dans lequel la différence entre la première teneur en eau et la deuxième teneur en eau peut être comprise entre 20 % et 90 % RH, ou plus spécifiquement entre 30 % et 85 % HR, ou plus spécifiquement entre 50 % et 80 % RH.

14. Système de séchage d'un gaz comprenant de l'eau (H₂O) pour réduire la teneur en eau du gaz, le système comprenant :
- une première source de gaz configurée pour fournir un premier flux de gaz (5) ayant une première teneur en eau,
- une première partie de refroidissement (7), où le premier flux de gaz (5) est configuré pour être alimenté vers la première partie de refroidissement (7) qui est configurée pour refroidir le gaz d'une première température à une deuxième température, où la première partie de refroidissement (7) comprend un premier échangeur de chaleur (11) ayant un premier milieu de refroidissement (15),
- une première partie de condensation (19), où le premier flux de gaz (5) est configuré pour être alimenté à la deuxième température vers une première partie de condensation (19), et où une première teneur en eau du premier flux de gaz (5) est configurée pour être réduite à une deuxième teneur en eau,
- une première partie de chauffage (25), où le premier flux de gaz (5) est configuré pour être alimenté vers la première partie de chauffage (25) qui est configurée pour chauffer le premier flux de gaz (5) de la deuxième température à une troisième température, où la première partie de chauffage (25) comprend un deuxième échangeur de chaleur (27) ayant un deuxième milieu de refroidissement (31),
- un dispositif de combustion (35), où le premier flux de gaz (5) est alimenté vers le dispositif de combustion (35) qui est configuré pour brûler le premier gaz et produire une première énergie thermique,
- un troisième échangeur de chaleur (33) configuré pour transférer la première énergie thermique au deuxième milieu de refroidissement (31), et
- un premier circuit d'échange de chaleur configuré pour faire circuler le deuxième milieu de refroidissement (31) entre le deuxième échangeur de chaleur (27) et le troisième échangeur de chaleur (33).
